# EUROPÄISCHE PATENTSCHRIFT

(11) **EP 2 705 582 B1**
(45) Veröffentlichungstag und Bekanntmachung des Hinweises auf die Patenterteilung: **11.04.2018**
(21) Anmeldenummer: 12717771.5
(22) Anmeldetag: 03.05.2012
(51) Int. Cl.: H02G 3/04

(54) **HALTERUNG ZUR SEITLICHEN BEFESTIGUNG EINER FÜHRUNGSRINNE FÜR ENERGIEFÜHRUNGSKETTEN UND HALTERUNGSSYSTEM MIT HALTERUNG**
RETAINER FOR LATERALLY FASTENING A GUIDE GROOVE FOR ENERGY SUPPLY CHAINS AND RETAINING SYSTEM HAVING SAID RETAINER
ÉLÉMENT DE RETENUE POUR LA FIXATION LATÉRALE D'UNE GOULOTTE DE GUIDAGE POUR CHAÎNES DE GUIDAGE D'ÉNERGIE ET SYSTÈME DE RETENUE DOTÉ D'UN ÉLÉMENT DE RETENUE

(30) Priorität: 05.05.2011 DE 202011100313 U
(43) Veröffentlichungstag der Anmeldung: 12.03.2014
(73) Patentinhaber: Igus GmbH, 51127 Köln (DE)
(72) Erfinder: HERMEY, Andreas, 53773 Hennef (DE)
(74) Vertreter: Lippert Stachow Patentanwälte Rechtsanwälte
(86) Internationale Anmeldenummer: PCT/EP2012/058075
(87) Internationale Veröffentlichungsnummer: WO 2012/150282

(56) Entgegenhaltungen:
- FR-A1- 2 682 230
- FR-A1- 2 758 419
- FR-A1- 2 840 462

## Beschreibung

Die Erfindung betrifft eine Halterung zur seitlichen Befestigung einer Führungsrinne für Energieführungsketten an einem Aufbau, wobei die Halterung eine Abstützung für einen Bodenbereich der Führungsrinne und eine Lagefixierung für die Führungsrinne aufweist, sich die Halterung mit einem Höhenabschnitt seitlich eines vorgesehenen Aufnahmeraumes für die Führungsrinne erstreckend angeordnet ist, wobei in dem Höhenabschnitt erste Befestigungsmittel zur Festlegung der Halterung in Höhe des Höhenabschnittes seitlich an dem Aufbau vorgesehen sind, die in einer Höhenrichtung von der Abstützung weg beabstandet zur Abstützung angeordnet sind und die ausgelegt sind, form- und/oder kraftschlüssig an der Führungsrinne anzugreifen, und wobei mittels der zweiten Befestigungsmittel eine Klemmverbindung mit der Führungsrinne herstellbar ist und die zweiten Befestigungsmittel als Klemmaufnahme für einen sich seitlich von der Führungsrinne erstreckenden ersten Vorsprung der Führungsrinne und als Klemmelement zum Einklemmen des ersten Vorsprunges in der Klemmaufnahmen in einer Klemmlage ausgebildet sind. Die Erfindung betrifft ferner ein Halterungssystem mit der Halterung und der Führungsrinne.

Eine derartige Halterung ist ausgebildet, um an einem Aufbau, wie beispielsweise an einem Kran mit auf einem Träger geführten und an Versorgungsleitungen angeschlossenen Laufkatze, seitlich angebracht zu werden. Hierbei kann zum Schutz der Energieführungskette vorgesehen sein, dass die Führungsrinne bei einem als Doppel-T-Träger ausgebildeten Träger mit endseitigen Querstegen in einem von den Querträgern begrenzten Fach des Doppel-T-Trägers anzubringen ist. Hierzu kann eine Reihe voneinander in Längsrichtung des Trägers bzw. der Führungsrinne beabstandete Halterungen vormontiert werden, die zur sicheren Aufnahme der Führungsrinne in der Regel als Konsolen ausgebildet sind, die die Führungsrinne über ihre gesamte Quererstreckung unterstützen und halten können. Anschließend können die Führungsrinnen in die Halterung eingelegt und zur Lagefixierung an derselben verschraubt werden, wozu an der Führungsrinnen entsprechende Schraublöcher vorgesehen sein müssen. Diese ist aufwändig und im Betrieb störanfällig.

Eine Halterung bzw. ein Halterungssystem der eingangs genannten Art wird in der FR 2 682 230 A beschrieben. Aufwändig hinsichtlich der Konstruktion, der Herstellung und Montage ist vorgesehen, dass die Halterung zur Festlegung der Führungsrinne als zweite Befestigungsmittel eine seitlich geöffnete Klemmaufnahme aufweist, in die die Führungsrinne mit einem seitlich von ihr erstreckenden Vorsprung eingeschoben, ausgerichtet und mittels einer Schraubverbindung festgeklemmt wird. Zusätzlich werden Profilleisten so mit der Halterung verschraubt, dass sie die Aufnahme übergreifen und die Führungsrinne gegen ein seitliches Verschieben sichern.

FR 2 758 419 A offenbart eine Halterung zur seitlichen Befestigung einer Führungsrinne, wobei die Halterung zur Festlegung der Führungsrinne eine bodenseitige Aufnahme und oberseitig eine nach unten geöffnete Klemmaufnahme mit einem Schwenkhebel aufweist, der die Führungsrinne in Klemmposition übergreifend in der Klemmaufnahme hält.

FR 2 840 462 A ist eine Halterung zur seitlichen Befestigung einer Führungsrinne entnehmbar, die unterseitig über ihre gesamte Breite durch die Halterung abgestützt wird und oberseitig in eine nach unten geöffnete Aufnahme eingreifend gehalten wird.

Aufgabe der Erfindung ist, eine gattungsgemäße Halterung bereitzustellen, die einfacher aufgebaut ist, ferner mittels derer die Führungsrinne einfacher montierbar ist und im Betrieb sicher gehalten werden kann.

Die gestellte Aufgabe wird erfindungsgemäß durch die Merkmale des Anspruches 1 gelöst. Vorteilhafte Weiterbildungen werden in den Unteransprüchen beschrieben. Die gestellte Aufgabe wird bereits dadurch gelöst, dass die Klemmaufnahme zur Aufnahme eines hakenförmig ausgebildeten ersten Vorsprunges der Führungsrinne zumindest mit einer Komponente in Höhenrichtung geöffnet ausgebildet ist..

Somit können die zweiten Befestigungsmittel in Höhenrichtung beabstandet zu einem Bodenbereich der Führungsrinne form- und/oder kraftschlüssig an der Führungsrinne angreifen. Damit kann die Führungsrinne an zwei voneinander höhenbeabstandeten Punkten bzw. Bereichen sicher und stabil gehalten werden, ohne dass hierzu beispielsweise Befestigungsöffnungen in der Führungsrinne vorgesehen sein müssen. Dank eines außenseitlichen Angriffes der zweiten Befestigungsmittel an der Führungsschiene kann die Halterung entsprechend einfach aufgebaut sein.

Die zweiten Befestigungsmittel können so ausgebildet sein, dass durch sie eine Klemmverbindung zwischen Halterung und Führungsrinne herstellbar ist. Dank dieser vorgesehenen Klemmverbindung kann eine einfache und rasche Lagefixierung der Führungsrinne an der Halterung erfolgen. Diese Lageverbindung kann entsprechend dem Aufbau einer Klemmverbindung sehr einfach bewerkstelligbar sein. Die räumliche Beabstandung der ersten Befestigungsmittel von den zweiten Befestigungsmitteln kann so ausgebildet sein, dass eine für die Halterung vorgesehene Führungsrinne einklemmt zwischen den ersten Befestigungsmittel und den zweiten Befestigungsmitteln anordenbar ist. Die Führungsrinne kann vorzugsweise unter Vorspannung zwischen den ersten und zweiten Befestigungsmitteln eingeklemmt an der Halterung angeordnet sein.

Hierzu könnten die zweiten Befestigungsmittel als Klemmaufnahme für einen sich von der Führungsrinne erstreckenden ersten Vorsprung der Führungsrinne und als Klemmelement zum Einklemmen des ersten Vorsprunges in der Klemmaufnahme in einer Klemmlage ausgebildet sein. Denkbar ist auch eine umgekehrte Anordnung von Klemmaufnahme an der Führungsrinne und Vorsprung an der Halterung. Die Klemmverbindung kann nun in einem einfachen Verbindungsvorgang mit Einführen des ersten Vorsprungs der Führungsrinne in die Klemmaufnahme und Einstecken des Klemmelementes in die Klemmaufnahme zum Einklemmen des ersten Vorsprunges in der Klemmaufnahme ausgebildet werden. Diese Klemmverbindung ist nicht nur konstruktiv einfach, sondern ermöglicht auch bei der Montage der Halterung in der Führungsrinne ein rasches Arbeiten. Die Klemmaufnahme kann insbesondere in Querrichtung des Aufnahmeraumes zu demselben und damit auch zur Führungsrinne hin zugänglich, insbesondere geöffnet oder ausgebildet sein. Um eine zusätzliche Kraft senkrecht zur Querrichtung und Längsrichtung der Führungsrinne mit Ausbildung der Klemmverbindung zu erhalten, kann vorgesehen sein, dass die Klemmaufnahme zumindest mit einer Komponente in oder gegen Höhenrichtung zugänglich, insbesondere geöffnet ausgebildet ist. Die Führungsrinne kann beispielsweise einen hakenförmig ausgebildeten ersten Vorsprung aufweisen, der von oben her in die von oben zugängliche Klemmaufnahme einführbar und gegen Höhenrichtung in derselben halterbar ist. Der hakenförmig ausgebildete erste Vorsprung kann abgewinkelt zur Querrichtung der Führungsrinne an derselben angeordnet sein. Das Hakenelement kann zu einer Ebene hin, in der der Boden der Führungsrinne enthalten ist, abgewinkelt ausgebildet sein und sich von der Führungsrinne weg erstrecken. Der hakenförmig ausgebildete erste Vorsprung kann endseitig vorzugsweise zumindest etwa rechtwinklig abgewinkelt sein. Hierdurch kann der erste Vorsprung sicher in der Klemmaufnahme gehalten werden.

Das Klemmelement kann sich über die gesamte Längserstreckung der Klemmaufnahme erstrecken. Das Klemmelement kann einen zumindest keilförmigen Querschnitt aufweisen. Das Klemmelement kann so ausgebildet sein, dass es dann in einer Klemmrichtung in die Klemmaufnahme einführbar ist. Hierbei kann es in Klemmrichtung hinten einen sich verjüngenden Querschnitt zu seinem vereinfachten Einführen in die Klemmaufnahme und zum Festklemmen des ersten Vorsprungs in der Klemmaufnahme aufweisen. Vorgesehen ist, dass das Klemmelement den ersten Vorsprung formschlüssig in der Klemmaufnahme hält. Vorzugsweise kann das Klemmelement einen pilzartigen Querschnitt mit einem sich in Klemmrichtung vorzugsweise endseitig verjüngenden Fuß und einem in Klemmrichtung vorderen Quersteg aufweisen. Der Quersteg kann hierbei als Anschlag beim Einführen des Klemmelementes in die Klemmaufnahme dienen, wobei der Anschlag außenseitig an der Klemmaufnahme und/oder an dem ersten Vorsprung in der Klemmaufnahme anschlagen kann. Damit kann der erste Vorsprung sicher in der Klemmaufnahme gehalten werden.

In einer bevorzugten Ausführungsform der Halterung ist vorgesehen, dass das Klemmelement in der Klemmaufnahme lagefixierbar ist. Hierzu kann beispielsweise eine Schraubverbindung zwischen Klemmelement und Klemmaufnahme vorgesehen sein. Es kann ein Schraubelement durch eine in das Klemmelement vorzugweise in Klemmrichtung eingebrachte erste Durchgangsöffnung geführt und in der Klemmaufnahme eingeschraubt werden. Vorzugsweise ist die erste Durchgangsöffnung so ausgebildet, dass der Schraubkopf in der ersten Durchgangsöffnung versenkbar ist. Zur Verschraubung des Schraubelementes mit der Klemmaufnahme kann eine Vorbohrung in derselben vorgesehen sein, in welche sich das Schraubelement unter Ausbildung eines Innengewindes in der Vorbohrung einschraubbar ist. Die Halterung kann zweckmäßig aus Kunststoff, vorzugsweise als Spritzgussteil hergestellt sein.

Die Abstützung kann in Abgrenzung des Aufnahmeraums über einen Stützbereich in Querrichtung von dem Höhenabschnitt weg vorkragen. Damit kann die Abstützung des Aufnahmeraums die Führungsrinne bodenseitig zumindest teilweise begrenzen. Aufgrund der zusätzlichen Festlegung der Führungsrinne mittels der zweiten Befestigungsmittel, höhenbeabstandet zu der Abstützung, ist es nicht notwendig, dass die Abstützung mit dem Stützbereich den Aufnahmeraum für die Führungsschiene bodenseitig vollständig begrenzt. Vielmehr kann in Vereinfachung der Halterung vorgesehen sein, dass der Stützbereich der Abstützung kleiner oder weitaus kleiner als eine vorgesehene bodenseitige Erstreckung des Aufnahmeraums in Querrichtung ist. Hierbei kann der Stützbereich kleiner als die Hälfte, vorzugsweise kleiner als ein Drittel oder idealerweise kleiner als ein Fünftel der bodenseitigen Erstreckung des Aufnahmeraumes in Querrichtung sein. Dank der Lagefixierung mittels der zweiten Befestigungsmittel kann der Stützbereich lediglich so weit in Querrichtung von dem Höhenabschnitt weg vorkragen, dass er den Aufnahmeraum für die Führungsrinne um einen geringen Betrag bodenseitig begrenzt.

Alternativ oder zusätzlich kann die Abstützung als Nut ausgebildet sein, die zur Aufnahme eines vorgesehenen zweiten Vorsprungs der Führungsrinne in Höhenrichtung geöffnet oder zugänglich ausgebildet ist. Entsprechend kann der zweite Vorsprung der Führungsrinne zum Eingriff in die Nut der Abstützung zumindest im Wesentlichen gegen Höhenrichtung verlaufen. Der zweite Vorsprung kann hakenförmig mit einem abgewinkelten Hakenende ausgebildet sein. Er kann sich außenseitig von der Führungsrinne in Querrichtung wegerstrecken und mit seinem abgewinkelten Hakenende gegen Höhenrichtung in die Nut der Abstützung eingreifen. Somit können der erste Vorsprung und der zweite Vorsprung der Führungsrinne höhenbeabstandet zueinander in die Klemmaufnahme bzw. in die Nut eingreifen. Der zweite Vorsprung kann in der Nut verrasten, wodurch ein fester Sitz der Führungsrinne an der Halterung weiter verbessert werden kann.

Alternativ oder zusätzlich kann eine weitere Ausführungsform der Halterung eine Klemmaufnahme aufweisen, die gegen Höhenrichtung geöffnet oder zugänglich ist. Die Beabstandung des zweiten Befestigungsmittel und der Abstützung können hierbei so dimensioniert sein, dass sich die Führungsrinne in Einbaulage in Höhenrichtung an der Klemmaufnahme abstützt und bodenseitig gegen Höhenrichtung an der Abstützung abstützt. Bei dieser Ausführungsform der Halterung kann sich der erste Vorsprung der Führungsrinne mit seinem vorzugsweise abgewinkelten Ende zum Eingriff in die gegen Höhenrichtung geöffnete Klemmaufnahme zumindest im Wesentlichen in Höhenrichtung erstrecken. Damit kann zur Anhalterung der Führungsrinne an der Halterung zunächst die Führungsrinne mit ihrem ersten Vorsprung in die Klemmaufnahme eingeführt werden und mit einer Absenkung der Führungsrinne um eine Drehachse in Längsrichtung mit der Klemmaufnahme als Drehlager abgesenkt und bodenseitig gegen die Abstützung so geführt werden, dass die Führungsrinne, vorzugsweise unter leichter Vorspannung, zwischen der Abstützung und der Klemmaufnahme formschlüssig eingeklemmt wird. Zur Sicherung der Führungsrinne in der Halterung kann in Einbaulager eine Verrastung der Führungsrinne an der Halterung insbesondere an der Abstützung erfolgen.

In einer vorteilhaften Weiterbildung der Halterung kann vorgesehen sein, dass die Halterung zur Einstellung ihrer relativen Lage zum Aufbau und/oder zur Führungsrinne höherverstellbar ausgebildet ist. Damit kann die Halterung vorteilhaft exakt an die Höhenlage der Führungsrinne eingestellt werden. Entsprechend kann die Halterung zur Einstellung ihrer relativen Lage zum Aufbau und/oder der Führungsrinne in Längsrichtung verstellbar ausgebildet sein. So können beispielsweise als erste Befestigungsmittel mehrere in Höhen- und/oder in Längsrichtung aneinander gereihte Befestigungslöcher zur Aufnahme eines weiteren ersten Befestigungsmittels wie eines Schraubelementes, vorgesehen sein, so dass hierüber eine diskontinuierliche Höheneinstellung erfolgen kann. Alternativ kann zur vorteilhaften kontinuierlichen Höhenverstellung eine Schiene vorgesehen sein, an der die Halterung in Höhenrichtung verschieblich und festlegbar angeordnet ist und die an dem Aufbau festlegbar ist.

Besonders bevorzugt, da konstruktiv unaufwendig, kann die Halterung als erste Befestigungsmittel ein sich zumindest mit einer Komponente in Höhenrichtung erstreckendes Langloch zur Aufnahme des weiteren ersten Befestigungsmittels, wie des Schraubelementes, aufweisen. In einer alternativen oder zusätzlichen Maßnahme kann es vorgesehen sein, dass die zweiten Befestigungsmittel eine erste Anlagefläche mit einem Zahnprofil zur Anlage an eine an dem ersten Vorsprung der Führungsrinne vorgesehenen zweiten Anlagefläche mit einem an das Zahnprofil der ersten Anlagefläche angepassten Zahnprofil aufweist. Hierbei können sich die Flächennormalen beider Anlageflächen in Einbaulage vorzugsweise zumindest nahezu senkrecht zur Höhenrichtung erstrecken. Zur Höheneinstellung können die Zahnprofile mit Eingriff des ersten Vorsprungs in die Klemmaufnahme in gewünschter relativen Höhenlage formschlüssig ineinander gebracht und mittels des Klemmelementes zueinander lagefixiert werden. Die erste Anlagefläche kann innenseitig der Klemmaufnahme angeordnet sein.

In einer alternativen bevorzugten Ausbildungsform der Halterung kann dieselbe zwei in und gegen Höhenrichtung verschieblich geführte Befestigungsteile, ein erstes Befestigungsteil zur Befestigung der Halterung an dem Aufbau und ein zweites Befestigungsteil zur Befestigung der Führungsrinne an der Halterung, aufweisen. Diese Befestigungsteile können anschlagsbegrenzt relativ zueinander zwischen einer Losposition, in der die Befestigungsteile voneinander lösbar sind, und einer Halteposition, in der die Befestigungsteile ineinander verschränkt sind, bewegbar sein. Hierbei kann die exakte Lage der Halteposition beispielsweise über zusammenwirkende Anschläge zur Höheneinstellung einstellbar sein. Zur Höheneinstellung kann beispielsweise eine Exzenteranordnung mit einem Exzenter vorgesehen sein, wobei der Exzenter als Anschlag für die Halteposition wirkt. Damit kann mittels des Exzenters der Anschlag für die Höheneinstellung verändert werden. Der Exzenter kann als eine umfängliche Kurvenseitenfläche aufweisende Kurvenscheibe ausgebildet sein, die exzentrisch um eine Drehachse an einem Befestigungsteil senkrecht zur Höhenrichtung gelagert ist. Mit seiner Drehung kann der Exzenter über seine Kurvenseitenfläche an einem in Höhenrichtung beabstandeten Punkt an dem anderen Befestigungsteil abgleiten. Hierüber kann bezüglich der Höhenrichtung der relative Abstand der beiden Befestigungsteils zueinander verändert werden. Über die Krümmung der Kurvenseite und die Exzentrizität derselben kann die Änderung der Beabstandung über einen Weg und die maximale Beabstandung eingestellt werden. Vorzugsweise weist die Kurvenseitenfläche zumindest über den Abschnitt, der zur Höheneinstellung an dem anderen Befestigungsteil abgleitet einen Zahnkranzabschnitt mit vorzugsweise sägezahnartigen Zähnen auf, die zur Höheneinstellung und Lagefixierung in an dem anderen Befestigungsteil vorgesehene kongruente Zähne eingreifen. Anstatt eines Exzenters kann auch ein anderes Stellglied, wie beispielsweise eine Stellschraube, zur Höheneinstellung eingesetzt werden, die, in einem Befestigungsteil gehalten und geführt, in oder gegen Höhenrichtung gegen das andere Befestigungsteil angreift.

Zur Montage der Halterung mit den beiden Befestigungsteilen an einem Aufbau kann zunächst das erste Befestigungsteil an dem Aufbau festgelegt werden. Dann kann das zweite Befestigungsteil so mit dem ersten Befestigungsteil verbunden werden, dass es an ihm vorzugsweise in Höhenrichtung verschieblich gelagert ist. Mit Erreichen einer bestimmten relativen Höhenlage zum ersten Befestigungsteil und damit zum Aufbau kann das zweite Befestigungsteil an dem ersten Befestigungsbauteil und/oder an dem Aufbau lagefixiert werde. Vorteilhaft einfach können die beiden Befestigungsteile jeweils über eine Schraubverbindung mit dem Aufbau verbunden werden. In einer bevorzugten Ausführungsform der Halterung kann eine parallel zum Aufnahmeraum angeordnete Durchführung für in Längsrichtung der Führungsrinne fest an dem Aufbau zu verlegende Versorgungsleitungen vorgesehen sein. Beispielsweise beim Kranbau taucht häufig das Problem auf, dass neben den in der Energieführungskette zu führenden lageveränderlichen Versorgungsleitungen für die Laufkatze eine Reihe von fest an dem Aufbau anzuordnenden Versorgungsleitungen vorzusehen sind, die sich angesichts des begrenzten Platzes an dem Träger für die Laufkatze störend auf das ordnungsgemäße Verfahren der Energieführungskette auswirken können. Daher ist das Vorsehen eines definierten Vorbeiführens der fest zu verlegenden Versorgungsleitungen im Bereich der Halterung sehr von Vorteil. Mit dem Vorsehen einer definierten Durchführung für die fest an dem Aufbau zu verlegenden Versorgungsleitungen kann diesem Problem wirksam begegnet werden. Die Durchführung kann in einer konstruktiv sehr einfachen Ausführungsform der Halterung seitlich von der Halterung und dem Aufnahmeraum begrenzt sein.

Die fest zu verlegenden Versorgungsleitungen können bezüglich der Halterung lose bleibend durch die Durchführung geführt sein. Vorzugsweise ist vorgesehen, dass eingangsseitig und/oder ausgangsseitig der Durchführung Befestigungsmöglichkeiten für die fest an dem Aufbau zu verlegenden Versorgungsleitung vorgesehen sind. Als Befestigungsmöglichkeiten können sich vorzugsweise in Längsrichtung von dem Höhenabschnitt weg erstreckende Vorsprünge vorgesehen sein, an denen die Versorgungsleitungen beispielsweise mittels Umschlingungsmittel, wie Kabelbindern oder Bändern, festlegbar sind. Die Vorsprünge können ein L- oder T-Profil mit Fußsteg und endseitigem Quersteg aufweisen. Hierbei kann der Fußsteg als Aufnahme der Umschlingungsmittel dienen während der endseitige Quersteg dafür sorgen kann, dass die Umschlingungsmittel nicht in Längsrichtung von dem Fußsteg herunter schiebbar sind.

Alternativ oder zusätzlich kann die Halterung einen sich gegen Höhenrichtung an den Höhenabschnitt anschließenden Aufnahmeabschnitt für weitere Befestigungsmöglichkeiten für die fest an dem Aufbau zu verlegenden Versorgungsleitungen aufweisen. Diese Befestigungsmöglichkeiten können wie oben ausgeführt ausgebildet sein.

Vorgeschlagen wird somit ein Halterungssystem mit einer Halterung gemäß einer der zuvor beschriebenen Ausführungsformen und einer Führungsrinne mit einem Boden zwei über dem Boden verbundene parallel beabstandete Seitenwände aufweist. Die Führungsrinne kann mittels der Halterung außenseitlich an einer ihrer Seitenwände an einem Aufbau gehaltert werden. Hierzu kann, wie oben beschrieben, die Führungsrinne zumindest an einer der beiden Seitenwänden außenseitlich einen ersten Vorsprung zum Zusammenwirken mit dem zweiten Befestigungsmitteln der Halterung und einen zweiten Vorsprung zum Zusammenwirken mit der Abstützung der Halterung aufweisen, wobei die beiden Vorsprünge höhenbeabstandet zueinander angeordnet sind. In Anpassung an die zweiten Befestigungsmittel bzw. an die Abstützung können die Vorsprünge hakenförmig ausgebildet sein, wobei sich ihr hakenförmiges Ende, abhängig von dem vorgesehenen Zusammenwirken mit den zweiten Befestigungsmittel bzw. mit der Abstützung, mit zumindest einer Hauptrichtungskomponente in Höhenrichtung weisen kann.

Die vorliegende Erfindung wird im Folgenden anhand mehrerer in einer Zeichnung dargestellten Ausführungsformen der Halterung bzw. des Halterungssystems mit Halterung und Führungsrinne näher erläutert. In der Zeichnung zeigen:
- Fig. 1: eine perspektivische Ausführungsform einer ersten Ausführung eines Halterungssystems mit einer ersten Ausführungsform einer Halterung und einer ersten Ausführungsform einer Führungsschiene,
- Fig. 2-4: jeweils eine Ansicht der Halterung gemäß Fig. 1,
- Fig. 5: eine perspektivische Ansicht eines Klemmelementes für das Halterungssystem gemäß Fig. 1,
- Fig. 6: eine Seitenansicht des Halterungssystems gemäß Fig. 1,
- Fig. 7: eine perspektivische Ansicht einer zweiten Ausführungsform der Halterung für das Halterungssystem gemäß Fig. 1,
- Fig. 8: eine Seitenansicht des Halterungssystems gemäß Fig. 1, jedoch mit einer Halterung gemäß Fig. 7,
- Fig. 9: eine Seitenansicht einer zweiten Ausführungsform des Halterungssystems mit einer zweiten Ausführungsform der Halterung und einer zweiten Ausführungsform der Führungsrinne,
- Fig. 10: eine Schnittansicht des Halterungssystems gemäß Fig. 9 gemäß dem Schnittverlauf X-X gemäß Fig. 9,
- Fig. 11-13: jeweils eine Ansicht der zweiten Ausführungsform des Halterungssystems gemäß Fig. 9,
- Fig. 14: eine perspektivische Draufsicht auf eine zweite Ausführungsform des Klemmelementes, hier für das Halterungssystem gemäß Fig. 9,
- Fig. 15: eine Seitenansicht des Halterungssystems gemäß Fig. 9 und eine Ausschnittsvergrößerung B, jeweils in einer ersten Höhenposition,
- Fig. 16: eine Seitenansicht des Halterungssystems gemäß Fig. 9 und eine Ausschnittsvergrößerung C, jedoch in einer zweiten Höhenposition,
- Fig. 17: eine perspektivische Ansicht einer dritten Ausführungsform des Halterungssystems mit einer dritten Ausführungsform der Halterung und einer dritten Ausführungsform der Führungsschiene,
- Fig. 18: eine Seitenansicht des Halterungssystems gemäß Fig. 17,
- Fig. 19: eine Schnittansicht gemäß dem Schnittverlauf XIX-XIX gemäß Fig. 18,
- Fig. 20a-c: jeweils eine Ansicht eines ersten Befestigungsteiles der dritten Ausführungsform der Halterung für das Halterungssystem gemäß Fig. 17,
- Fig. 21a-c: jeweils eine Ansicht eines zweiten Befestigungsteiles der dritten Ausführungsform der Halterung für das Halterungssystem gemäß Fig. 17,
- Fig. 22: eine Seitenansicht der dritten Ausführungsform der Halterung in erster Höhenposition,
- Fig. 23: eine Schnittansicht gemäß dem Schnittverlauf XXIII-XXIII in Fig. 22 mit einem Exzenter als verstellbaren Anschlag zur Höheneinstellung
- Fig. 24: eine Seitenansicht des Halterungssystems gemäß Fig. 17 in erster Höhenposition,
- Fig. 25: eine Seitenansicht der dritten Ausführungsform der Halterung, jedoch in einer zweiten Höhenposition,
- Fig. 26: eine Schnittansicht gemäß dem Schnittverlauf XXVI-XXVI in Fig. 25,
- Fig. 27: eine Seitenansicht des Halterungssystems, jedoch in zweiter Höhenposition und
- Fig. 28: eine Schnittansicht ähnlich dem Schnittverlauf XXIII-XIII, jedoch mit einer Stellschraube als verstellbarer Anschlag zur Höheneinstellung.

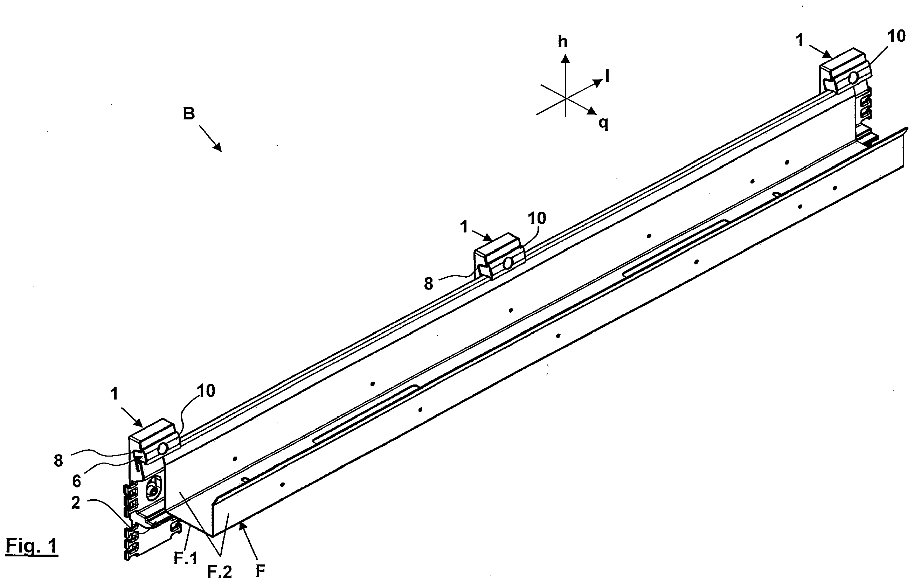

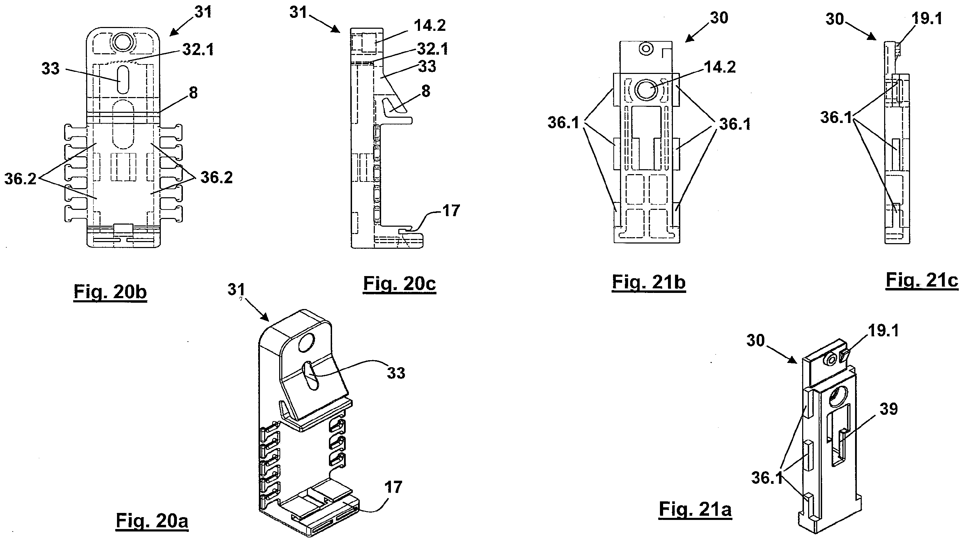

In den Figuren 1 bis 28 werden verschiedene Ausführungsformen, Ansichten und Teildarstellungen unterschiedliche Ausführungsformen eines Halterungssystems B mit einer Führungsrinne F für hier nicht dargestellte Energieführungsketten und eine Halterung 1 zur seitlichen Befestigung der Führungsrinne F an einem hier nicht dargestellten Aufbau gezeigt.

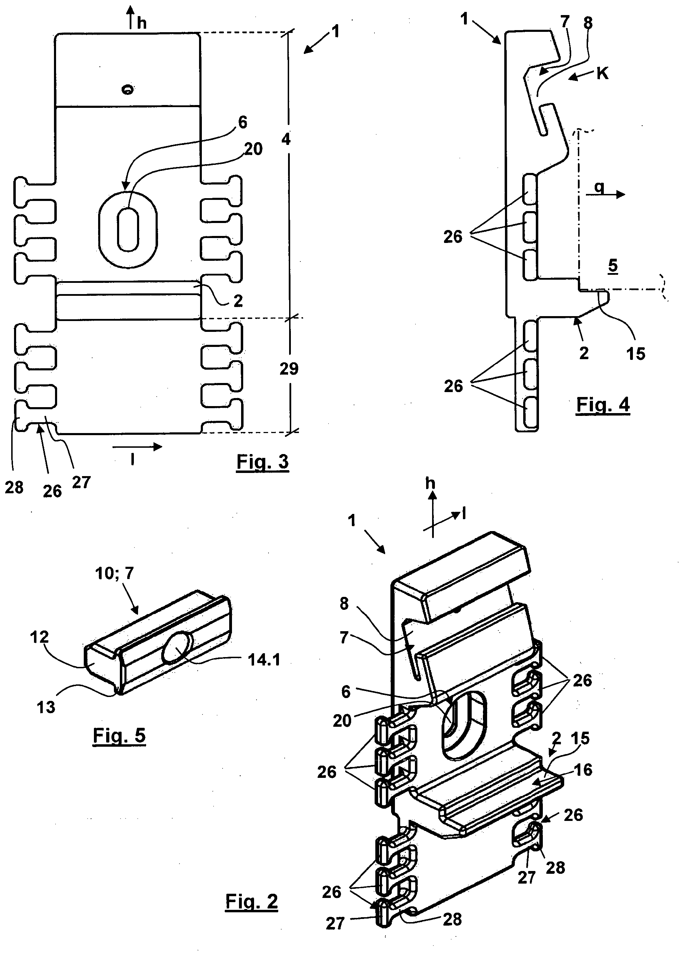

Die Halterung 1 weist eine Abstützung 2 für einen Bodenbereich 3 der Führungsrinne F und eine Lagefixierung für die Führungsrinne F auf. Die Halterung 1 erstreckt sich mit einem Höhenabschnitt 4 seitlich eines Aufnahmeraumes 5 für die Führungsschiene F. Dieser Aufnahmeraum 5 ist in den Abbildungen, in denen die Halterung 1 zusammen mit der Führungsrinne F gezeigt ist, durch die Führungsschiene F an sich repräsentiert und daher lediglich in Figur 4 mit gestrichelten Linien angedeutet. Die Führungsrinne F weist einen Boden (F.1) und zwei über den Boden (F.1) verbundene, parallel beabstandete Seitenwände (F.2) auf, wobei die Führungsrinne (F) mittels der Halterung (1) außenseitlich einer ihrer Seitenwände (F.2) an einem hier nicht gezeigten Aufbau halterbar ist.

In dem Höhenabschnitt 4 sind erste Befestigungsmittel 6 zur Festigung der Halterung 1 in Höhe des Höhenabschnitts 4 seitlich an dem hier nicht dargestellten Aufbau vorgesehen. Die Halterung 1 weist zweite Befestigungsmittel 7 auf, die in einer Höhenrichtung h von der Abstützung 2 weg beabstandet zur Abstützung 2 angeordnet sind. Die zweiten Befestigungsmittel 7 sind ausgelegt, form- und/oder kraftschlüssig an der Führungsrinne 5 anzugreifen.

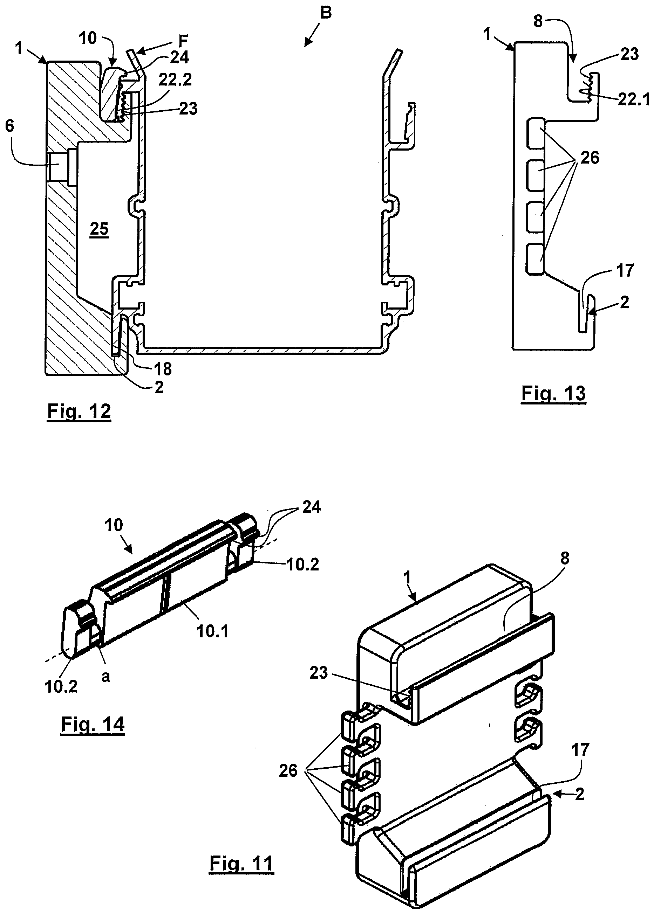

Mittels des zweiten Befestigungsmittels 7 kann eine Klemmverbindung der Halterung 1 mit der Führungsrinne F hergestellt werden. Hierzu weisen die beiden ersten Ausführungsformen des Halterungssystems B bzw. der Halterung 1 gemäß den Figuren 1 bis 16 eine Klemmaufnahme 8 für einen sich seitlich von der Führungsrinne F erstreckenden ersten Vorsprung 8 der Führungsrinne F auf, wobei der Vorsprung 8 formschlüssig in die Klemmaufnahme eingreift. Zur kraftschlüssigen Klemmverbindung ist jeweils ein Klemmelement 10 vorgesehen, das in den Figuren 5 und 14 jeweils in einer Einzeldarstellung gezeigt ist. Das Klemmelement 10 ist zum Einklemmen des ersten Vorsprungs 9 in der Klemmaufnahme 8 ausgebildet, wobei der erste Vorsprung 9 in der Klemmaufnahme 8 in einer Klemmlage angeordnet ist. In allen Ausführungsformen des Halterungssystems B ist die Führungsrinne F an zwei höhenbeabstandeten Punkten seitlich durch die Halterung 1 lagefixiert. Die Führungsrinne F für das Halterungssystems B gemäß den Figuren 1 bis 8 ist aus einem abgewinkelten Stahlprofil abgelängt.

In den beiden ersten Ausführungsformen des Halterungssystems B gemäß den Figuren 1 bis 16 ist die Klemmaufnahme 8 zur Aufnahme des ersten Vorsprungs 9 der Führungsrinne F in Höhenrichtung h geöffnet bzw. zugänglich ausgebildet. Der erste Vorsprung 9 ist hakenförmig mit einem abgewinkelten Hakenende 11 ausgebildet, mit dem der erste Vorsprung 9 in die Klemmaufnahme 8 eingreift.

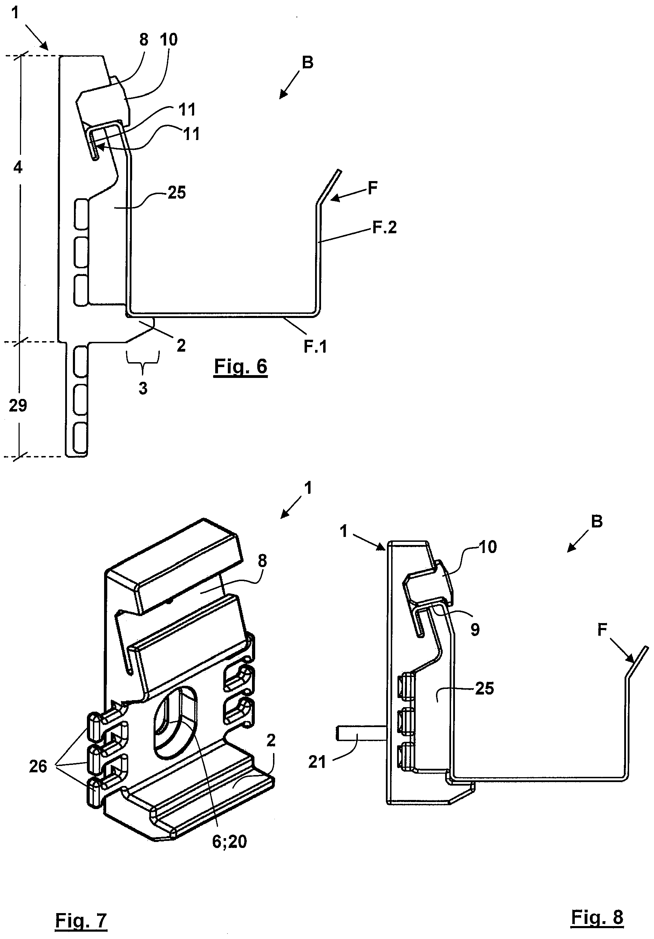

Das Klemmelement 10 der Halterung 1 für das Halterungssystem B gemäß den Figuren 1 bis 8 weist einen pilzartigen Querschnitt mit einem Fußsteg 12 und einem endseitigen Quersteg 13 auf. Das Klemmelement 10 wird in einer Klemmrichtung k in die Klemmaufnahme 8 unter Einklemmung des ersten Vorsprunges 9 eingeschoben. Zur Lagefixierung des Klemmelementes 10 in Klemmlage gemäß Figuren 6 und 8 ist eine hier nicht weiter dargestellte Schraubverbindung vorgesehen, wobei ein hier nicht dargestelltes Schraubelement durch eine mittige erste Durchgangsöffnung 14 des Klemmelementes 10 eingeführt und in die Halterung 1 eingeschraubt wird. Der Fußsteg 12 ist zum leichteren Einführen in die Klemmaufnahme 8 in Klemmrichtung k hinten verjüngt. Der Quersteg 13 dient, wie in den Figuren 6 und 8 deutlich entnehmbar, als Anschlag in Klemmrichtung k.

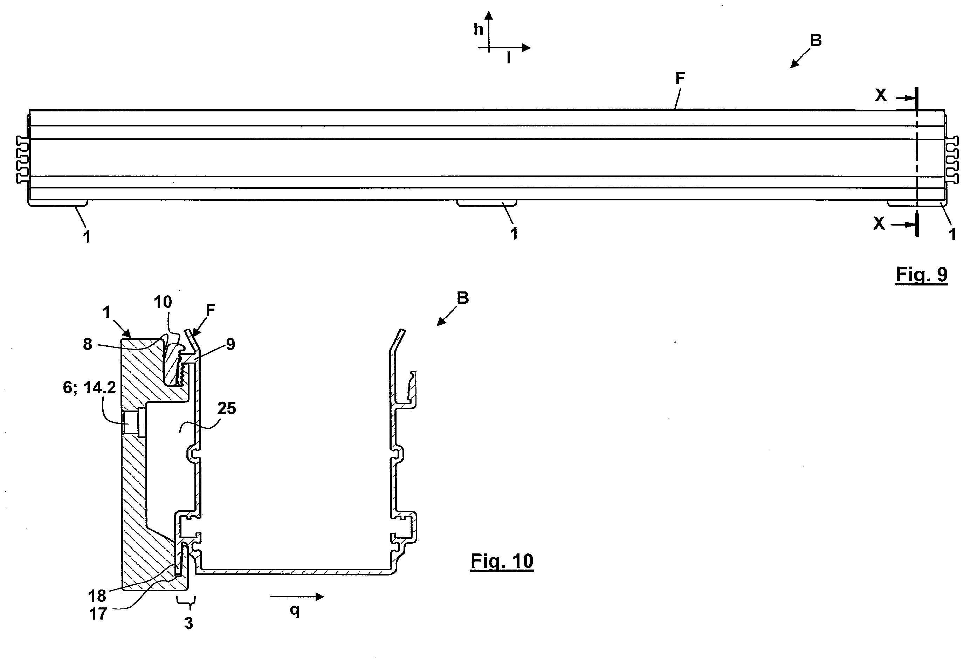

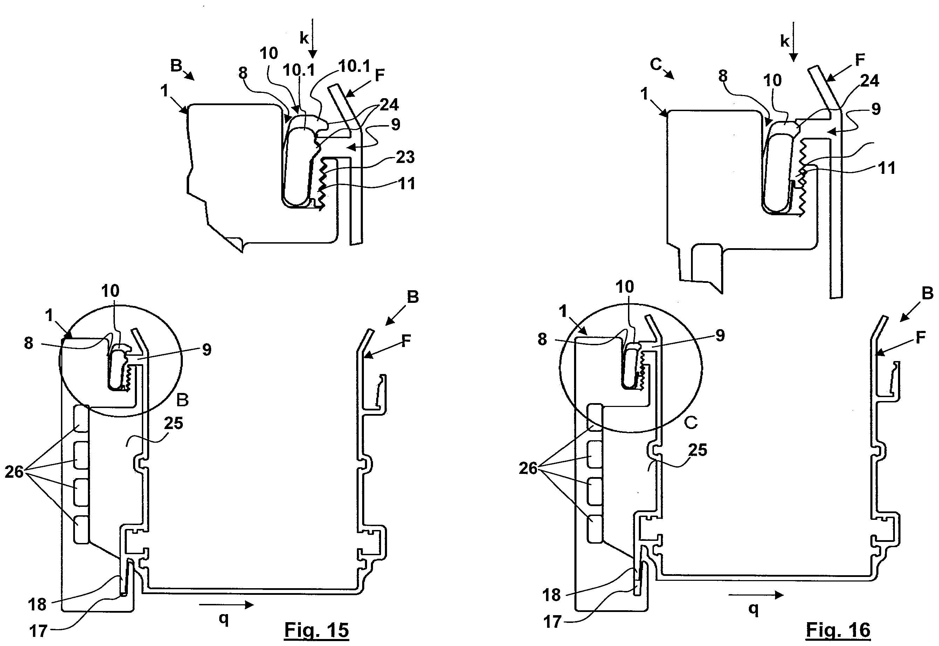

Das Klemmelement 10 für die zweite Ausführungsform des Halterungssystems B gemäß den Figuren 9 bis 17 weist seitliche Rastnasen 24 auf, mit denen es, wie in den Figuren 15 und 16 gezeigt, in verschiedenen Höhenpositionen an dem Hakenende 11 des ersten Vorsprunges 9 unter Vorspannung verrasten kann. Das Klemmelement 10 weist hier (Figur 14) zudem einen Mittelteil 10.1 mit seitlichen Flügeln 10.2 auf, die über eine Achse a miteinander verbunden sind. Damit können die beiden Flügel 10.2 gegenüber dem Mittelteil 10.1 an der Achse a gegeneinander federelastisch verspannt werden. Somit kann das Klemmelement 10 in sich federeleastisch verspannt in die Klemmaufnahme 8 eingesetzt werden und sich unter teilweiser Entspannung in der Klemmaufnahme 8 verspannen. Damit ist das Klemmelement 8 lose bleibend, d.h. ohne feste Verbindung, in der Klemmaufnahme 8 angeordnet.

Die Abstützung 2 ragt in Abgrenzung des Aufnahmeraums 5 mit einem Stützbereich 15 in Querrichtung q von dem Höhenabschnitt 4 weg vor. Bei den hier gezeigten Ausführungsformen des Halterungssystems B erstreckt sich dieser Stützbereich 15 der Abstützung 2 lediglich mit einem geringen Betrag über den Bodenbereich 3 der Führungsrinne F. In der ersten Ausführungsform gemäß den Figuren 1 bis 8 ist der Stützbereich 15 lediglich als L-förmige Ausnehmung 16 ausgebildet, in der sich die Führungsrinne F im Bodenbereich 3 seitlich abstützt.

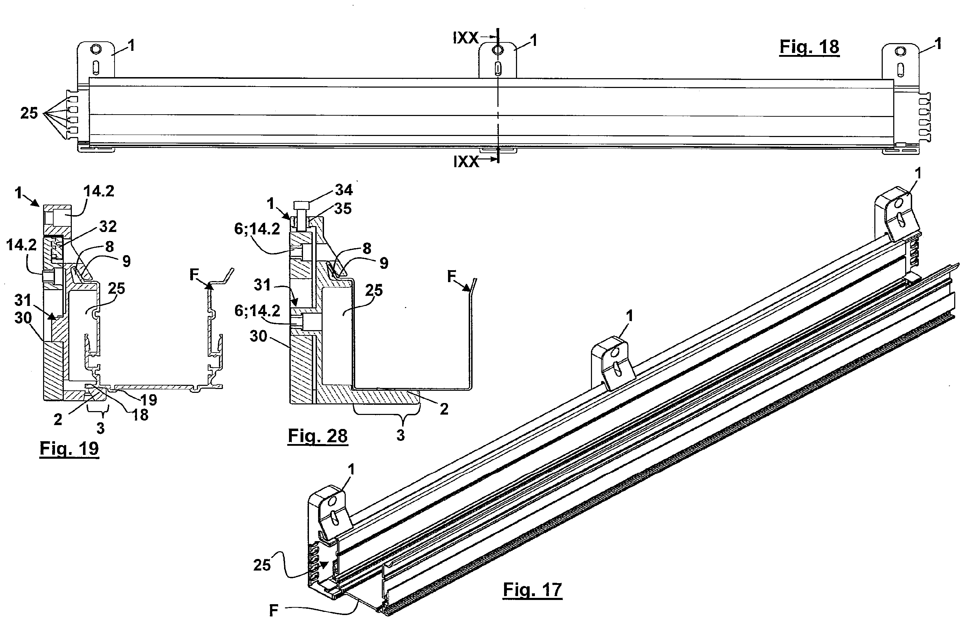

In den beiden Ausformen des Halterungssystems B gemäß den Figuren 9 bis 16 bzw. 17 bis 27 ist in dem Stützbereich 15 eine Nut 17 vorgesehen, in die die Führungsrinne F mit einem zweiten Vorsprung 18 eingreift. Hierbei erstreckt sich der zweite Vorsprung 18 in der Ausführungsform gemäß den Figuren 9 bis 16 hakenförmig mit seinem Hakenende 11 gegen Höhenrichtung in die entsprechend in Höhenrichtung h geöffnete Nut 17 hinein und stützt sich in derselben ab. Hingegen wird in der Ausführungsform des Halterungssystems B gemäß den Figuren 18 bis 27 der zweite Vorsprung in der Nut 17 verrastet, wobei sich der zweite Vorsprung 18 hier in Querrichtung q von dem Bodenbereich 3 weg erstreckt und in die in Querrichtung geöffnete Nut 17 einrastend eingreift. Es ist zudem außenseitig am Bodenbereich 3 ein Anschlag 19 zur Begrenzung des Eingriffes des zweiten Vorsprungs 18 in die Nut 17 vorgesehen.

Abweichend zu den übrigen Ausführungsformen des Halterungssystems B ist in der gemäß den Figuren 17 bis 27 die Klemmaufnahme 8 gegen Höhenrichtung h geöffnet ausgebildet. Der erste Vorsprung 9 weist ferner im Wesentlichen in Höhenrichtung h. Zur Festlegung der Führungsrinne F an der Halterung 1 wird der erste Vorsprung 9 etwa in Querrichtung q in die Klemmaufnahme 8 eingeführt. Anschließend wird die Führungsrinne F mit dem ersten Vorsprung 9 als Drehachse in der Klemmaufnahme 8 in derselben abgesenkt, wobei der zweite Vorsprung 18, wie bereits ausgeführt, im Stützbereich 15 der Halterung 1 in die Nut 17 verrastend eingeführt wird. Damit ist die Führungsrinne F formschlüssig an der Halterung 1 festgelegt.

Bei allen hier gezeigten Ausführungsformen des Halterungssystems B sind Führungsrinne F und Halterung 1, solange keine Lagefixierung der Führungsrinne F an der Halterung 1 erfolgt, in Längsrichtung l relativ zueinander verschiedentlich ausgebildet. Ferner kann über die Halterung 1 eine Höhenverstellung durchgeführt werden, mittels derer eine genauere Höheneinstellung der Führungsrinne F bezüglich des hier nicht gezeigten Aufbaus erfolgen kann.

In der Ausführungsform gemäß den Figuren 1 bis 8 ist hierzu lediglich ein Langloch 20 vorgesehen, durch welches ein hier in Figur 8 angedeutetes Schraubelement 21 zur Festlegung der Halterung 1 an dem Aufbau eingreift. Über ein Verschieben der Halterung 1 an dem Schraubelement 21 in dem Langloch 20 kann eine Höhenverstellung der Halterung über die Länge des Langlochs 20 erfolgen.

In den Ausführungsformen des Halterungssystems B gemäß den Figuren 9 bis 16 ist jeweils innenseitig in der Klemmaufnahme 8 und an dem Hakenende 11 des ersten Vorsprunges 9 eine erste Anlagefläche 22.1 bzw. eine zweite Anlagefläche 22.1 mit jeweils einem Zahnprofil 23 vorgesehen, wobei die Anlageflächen 22.1, 22.2 etwa senkrecht zur Querrichtung q angeordnet sind. Zur Höheneinstellungwerden die Anlageflächen 22.1, 22.2 in gewünschter Höhenlage unter Ineinandergreifen ihrer Zahnprofile 23 gegeneinander gebracht und durch Festklemmen mittels des Klemmelementes 10 lagefixiert. Damit ist der erste Vorsprung 9 in der Klemmaufnahme 8 lagefixiert. In den Figuren 15 und 16 ist jeweils eine Höhenposition, in Figur 15 eine erste Höhenposition und in Figur 16 eine zweite Höhenposition der Führungsrinne F bezüglich der Halterung 1 gezeigt. Das Klemmelement 10 weist Rastnasen 24 auf, mittels derer es an dem ersten Vorsprung 9 der Führungsrinne F verrasten kann. Hierzu greifen die Rastnasen unter elastischer Federvorspannung in Querrichtung q in den ersten Vorsprung 9 ein. Zur Lagefixierung der Halterung 1 an dem Aufbau ist als erstes Befestigungsmittel 6 eine abgesenkte zweite Durchgangsöffnung 14.2 vorgesehen.

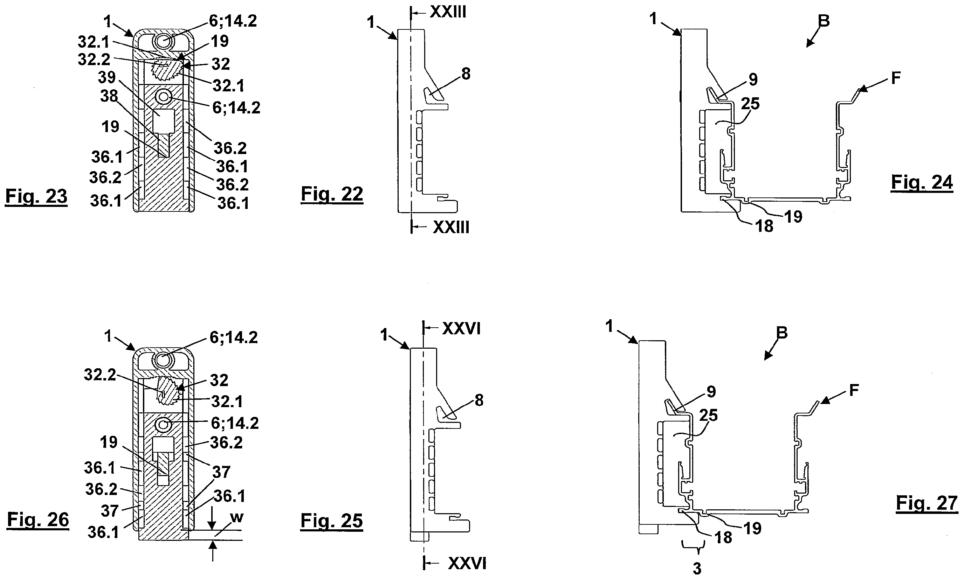

Zur Höhenverstellung an dem Halterungssystem B gemäß den Figuren 18 bis 27 weist die Halterung 1 zwei ineinander in und gegen die Höhenrichtung h verschieblich geführte Befestigungsteile, ein erstes Befestigungsteil 30 zur Befestigung der Halterung 1 an dem Aufbau und ein zweites Befestigungsteil 31 zur Befestigung der Führungsrinne F an der Halterung 1 auf. Die Befestigungsteile 30, 31 sind anschlagsbegrenzt relativ zueinander zwischen einer Losposition, in der die Befestigungsteile 30, 31 voneinander lösbar sind, und eine Halteposition, in der die Befestigungsteile miteinander verschränkt sind, bewegbar. Die beiden Befestigungsteile 30, 31 sind einzeln an dem Aufbau fixierbar. Hierzu weisen beide abgesenkte zweite Durchgangsöffnungen 14.2 auf. Zur Lagefixierung der Halterung 1 wird zunächst das erste Befestigungsteil 30 an dem Aufbau lagefixiert. Dann wird das zweite Befestigungsteil 31 gegen Querrichtung q über das erste Befestigungsteil 30 so gesteckt, das damit in Höhenrichtung h innenseitig verschieblich an dem zweiten Befestigungsteil 31 anliegt. Zur Höhenverstellung sind zusammenwirkende Anschläge 19 vorgesehen, wobei hier als ein Anschlag 19 ein Exzenter 32 mit einem außenseitigen Zahnkranz 32.1 und einer Werkzeugöffnung 32.2 zur Drehung des Exzenters 32 vorgesehen. Der Exzenter 32 ist hier an dem ersten Befestigungsteil 30 drehbar angeordnet und stützt sich mit seinem Zahnkranz 32.1 innenseitig oben unter Ausbildung des Anschlages 19 an einem bogenabschnittsartigem Zahnkranz 32.1 des zweiten Befestigungsteil 30 an demselben ab. Mit Drehung des Exzenters 32 kann die relative Lage der beiden Befestigungsteile 30, 31 in Höhenrichtung h über einen Weg w (Figur 26) eingestellt werden, wobei die Zahnkränze 32.1 von Exzenter 32 und zweitem Befestigungsteil 30 an einander verrastend ineinander greifen. Der Exzenter 32 kann ein hier nicht dargestelltes Werkzeug eingestellt werden, das unter Durchgriff durch eine in dem zweiten Befestigungsteil 31 vorgesehene Exzenteröffnung 33 in die Werkzeugöffnung 32.2 des Exzenters 32 eingreift.

Zur verschieblichen Führung in Höhenrichtung h greifen die Befestigungsteile 30, 31 zahnartig ineinander. Hierzu ist das zweite Befestigungsteil 31 gegen Querrichtung q offen. Das erste Befestigungsteil 30 umfasst seitlich vorstehende erste Führungsvorsprünge 36.1, mittels derer das erste Befestigungsteil 30 in Querrichtung q durch am zweiten Befestigungsteil 31 vorgesehene Öffnungen 37 eingesetzt wird (Figur 23). Diese Öffnungen 37 werden in Höhenrichtung h durch nach Innen ragende zweite Führungsvorsprünge 36.2 begrenzt, die mit dem Verschieben des eingesetzten ersten Befestigungsteils 30 in Höhenrichtung h in die Halteposition hinein von den ersten Führungsvorsprüngen 36.1 hintergriffen werden (Figur 26). Hierbei liegt das erste Befestigungsteil 31 in Querrichtung q vorn an dem zweiten Befestigungsteil 31 verschieblich an.

Zur weiteren Anschlagsbegrenzung gegen Höhenrichtung h weist das zweite Befestigungsteil 31 innenseitig einen anschlagswirksamen dritten Vorsprung 38 auf. Dieser greift mit Ineinandergreifen der beiden Befestigungsteile 30, 31 in eine am ersten Befestigungsteil 30 vorgesehene Öffnung 39 ein, wobei der dritte Vorsprung 38 in der Losposition gegen Höhenrichtung h randseitig an der Öffnung 37 anschlägt (Figur 23). Zur Lagefixierung in Höhenrichtung h ist oben an dem ersten Befestigungsmittel 30 ein vorkragender Anschlag 19.1 vorgesehen, der mit Ineinanderstecken der beiden Befestigungsteile 30, 31 in Höhe des Exzenters 32 innenseitig an dem zweiten Befestigungsteil 31 anschlägt. Mit erfolgter Höheneinstellung des zweiten Befestigungsteils 31 an dem bereits an dem Aufbau Lage fixierten ersten Befestigungsteil 30 kann das zweite Befestigungsteils 31 seinerseits an dem Aufbau Lage fixiert werden. Hierzu weist es ebenfalls eine zweite Durchgangsöffnungen 14.2 als erstes Befestigungsmittel 6 auf.

In Figur 28 wird eine Schnittansicht ähnlich dem Schnittverlauf IXX-IXX in Figur 19 gezeigt, wobei hier anstatt des Exzenters als einstellbarer Anschlag eine Stellschraube 34 zur Höheneinstellung vorgesehen ist, wobei die Stellschraube 34, in einer Schraubfassung 35, in dem zweiten Befestigungsteil 30 gehalten und geführt, gegen Höhenrichtung h gegen das erste Befestigungsteil 31 angreift. Ferner erstreckt sich hier die Abstützung 2 über etwa die Hälfte des Bodenbereiches 3 der Führungsrinne F.

Das Halterungssystem B weist zudem in den gezeigten Ausführungsformen eine Durchführung 25 für in Längsrichtung l der Führungsrinne F fest an dem Aufbau zu verlegende, hier nicht dargestellten Versorgungsleitungen auf. Die Durchführung 25 wird seitlich von der Halterung 1 und dem Aufnahmeraum 5 bzw. der Führungsrinne F begrenzt. Eingangsseitig und ausgangsseitig der Durchführung 25 sind sich in Längsrichtung l erstreckende Vorsprünge 26 vorgesehen, an denen die fest an dem Aufbau zu verlegende Versorgungsleitung mittels hier nicht dargestellter Umschlingungsmittel festlegbar sind. Die Vorsprünge 26 weisen ein T-Profil mit Fußsteg 26 und endseitigem Quersteg 27 auf. Als Umschlingungsmittel können beispielsweise Kabelbinder dienen, die gemeinsam um die hier nicht dargestellten zu verlegenden Versorgungsleitungen und den Fußsteg 26 festgezogen werden, wobei der endseitige Quersteg 27 ein Abrutschen dieser Umschlingungsmittel verhindert.

### Bezugzeichenliste

- 1: Halterung
- 2: Abstützung
- 3: Bodenbereich
- 4: Höhenabschnitt
- 5: Aufnahmeraum
- 6: erste Befestigungsmittel
- 7: zweite Befestigungsmittel
- 8: Klemmaufnahme
- 9: erster Vorsprung
- 10: Klemmelement
- 10.1: Mittelteil
- 10.2: Flügel
- 11: Hakenende
- 12: Fußsteg
- 13: Quersteg
- 14.1: erste Durchgangsöffnung
- 14.2: zweite Durchgangsöffnung
- 15: Stützbereich
- 16: Ausnehmung
- 17: Nut
- 18: zweiter Vorsprung
- 19: Anschlag
- 20: Langloch21 Schaubelement
- 22.1: erste Anlagefläche
- 22.2: zweite Anlagefläche
- 23: Zahnprofil
- 24: Rastnase
- 25: Durchführung
- 26: Vorsprung
- 27: Fußsteg
- 28: Quersteg
- 29: Aufnahmeabschnitt
- 30: erstes Befestigungsteil
- 31: zweites Befestigungsteil
- 32: Exzenter
- 32.1: Zahnkranz
- 32.2: Werkzeugöffnung
- 33: Exzenteröffnung
- 34: Stellschraube
- 35: Schraubfassung
- 36.1: erster Führungsvorsprung
- 36.2: zweiter Führungsvorsprung
- 37: Öffnung
- 38: dritter Vorsprung
- 39: Öffnung
- B: Halterungssystem
- F: Führungsrinne
- F.1: Boden
- F.2: Seitenwand
- a: Achse
- h: Höhenrichtung
- k: Klemmrichtung
- l: Längsrichtung
- q: Querrichtung
- w: Weg

## Patentansprüche

1. Halterung (1) zur seitlichen Befestigung einer Führungsrinne (F) für Energieführungsketten an einem Aufbau, wobei die Halterung (1) eine Abstützung (2) für einen Bodenbereich (3) der Führungsrinne (F) und eine Lagefixierung für die Führungsrinne (F) aufweist, sich die Halterung (1) mit einem Höhenabschnitt (4) seitlich eines vorgesehenen Aufnahmeraumes (5) für die Führungsrinne (F) erstreckend anordenbar ist, wobei in dem Höhenabschnitt erste Befestigungsmittel (6) zur Festlegung der Halterung (1) in Höhe des Höhenabschnittes (4) seitlich an dem Aufbau vorgesehen sind, und die Halterung (1) zweite Befestigungsmittel (7) aufweist, die in einer Höhenrichtung (h) von der Abstützung weg beabstandet zur Abstützung (2) angeordnet sind und die ausgelegt sind, form- und/oder kraftschlüssig an der Führungsrinne (F) anzugreifen, und wobei mittels der zweiten Befestigungsmittel (7) eine Klemmverbindung mit der Führungsrinne (F) herstellbar ist und die zweiten Befestigungsmittel (7) als Klemmaufnahme (8) für einen sich seitlich von der Führungsrinne (F) erstreckenden ersten Vorsprung (9) der Führungsrinne (F) und als Klemmelement(10) zum Einklemmen des ersten Vorsprunges (9) in der Klemmaufnahme (8) in einer Klemmlage ausgebildet sind, **dadurch gekennzeichnet, dass** die Klemmaufnahme (8) zur Aufnahme eines hakenförmig ausgebildeten ersten Vorsprunges (9) der Führungsrinne (F) zumindest mit einer Komponente in Höhenrichtung (h). geöffnet ausgebildet ist.

2. Halterung (1) nach Anspruch 1, **dadurch gekennzeichnet, dass** das Klemmelement (10) in Klemmlage in der Klemmaufnahme (8) lagefixierbar ist.

3. Halterung (1) nach Anspruch 1 oder 2, **dadurch gekennzeichnet, dass** die Abstützung (2) in Abgrenzung des Aufnahmeraumes (5) mit einem Stützbereich (15) in Querrichtung (q) von dem Höhenabschnitt (4) weg vorkragt.

4. Halterung (1) nach Anspruch 3, **dadurch gekennzeichnet, dass** die Abstützung (2) den Aufnahmeraum (5) für die Führungsrinne (F) bodenseitig mit einem Stützbereich (15) begrenzt, wobei der Stützbereich (15) kleiner als eine vorgesehene bodenseitige Erstreckung des Aufnahmeraumes (5) in Querrichtung (q) ist.

5. Halterung (1) nach Anspruch 4, **dadurch gekennzeichnet, dass** der Stützbereich (15) kleiner als die Hälfte, kleiner als ein Viertel oder kleiner als ein Sechstel der bodenseitigen Erstreckung des Aufnahmeraumes (5) in Querrichtung (q) ist.

6. Halterung (1) nach Anspruch 1, **dadurch gekennzeichnet, dass** die Abstützung (2) als Nut (17) ausgebildet ist, die zur Aufnahme eines vorgesehenen zweiten Vorsprunges (18) der Führungsrinne (F) in Höhenrichtung (h) geöffnet ausgebildet ist.

7. Halterung (1) nach Anspruch 6, , **dadurch gekennzeichnet, dass** die Beabstandung der zweiten Befestigungsmittel (7) und der Abstützung (2) so dimensioniert ist, dass sich die Führungsrinne (F) in Einbaulage formschlüssig und unter einer Klemmspannung in Höhenrichtung (h) an der Klemmaufnahme (8) abstützt und bodenseitig gegen Höhenrichtung (h) an der Abstützung (2) abstützt.

8. Halterung (1) nach einem der Ansprüche 1 bis 7, **dadurch gekennzeichnet, dass** sie zur Einstellung ihrer relativen Lage zum Aufbau und/oder zur Führungsrinne (F) höhenverstellbar ausgebildet ist.

9. Halterung (1) nach Anspruch 8, **dadurch gekennzeichnet, dass** die ersten Befestigungsmittel (6) ein sich zumindest mit einer Komponente in Höhenrichtung (h) erstreckendes Langloch (20) zur Aufnahme eines weiteren ersten Befestigungsmittel (6), wie eines Schraubelementes (21), aufweist.

10. Halterung (1) nach Anspruch 8 oder 9, **dadurch gekennzeichnet, dass** die Klemmaufnahme (8) eine erste Anlagefläche (22.1) mit einem Zahnprofil (23) zur Anlage an eine an dem ersten Vorsprung (9) der Führungsrinne (F) vorgesehene zweite Anlagefläche (22.2) mit einem an das Zahnprofil (23) der ersten Anlagefläche (22.1) angepassten Zahnprofil (23) aufweist, wobei die Zahnprofile (23) in Einbaulage der Führungsrinne (F) zur Abstützung der Führungsrinne (F) an der Halterung (1) ineinander greifen.

11. Halterung (1) nach einem der Ansprüche 8 bis 10, **dadurch gekennzeichnet, dass** sie zwei ineinander in und gegen Höhenrichtung (h) verschieblich geführte Befestigungsteile, ein erstes Befestigungsteil (30) zu ihrer Befestigung an dem Aufbau und ein zweites Befestigungsteil (31) zur Befestigung der Führungsrinne (F) an der Halterung (1), aufweist, wobei die Befestigungsteile (30, 31) anschlagsbegrenzt relativ zueinander zwischen einer Losposition, in der die Befestigungsteile (30, 31) voneinander lösbar sind, und einer Halteposition, in der die Befestigungsteile (30, 31) miteinander verschränkt sind, bewegbar, wobei in der Halteposition zusammenwirkende Anschläge zur Höheneinstellung einstellbar sind.

12. Halterung (1) nach einem der Ansprüche 1 bis 11, **dadurch gekennzeichnet, dass** eine parallel zum Aufnahmeraum (5) angeordnete Durchführung (25) für in Längsrichtung der Führungsrinne (F) fest an dem Aufbau zu verlegende Versorgungsleitungen vorgesehen ist.

13. Halterung (1) nach Anspruch 12, **dadurch gekennzeichnet, dass** die Durchführung (25) seitlich von der Halterung (1) und dem Aufnahmeraum (5) begrenzt wird.

14. Halterung (1) nach Anspruch 12 oder 13, **dadurch gekennzeichnet, dass** eingangsseitig und/oder ausgangsseitig der Durchführung (25) Befestigungsmöglichkeiten für die fest an dem Aufbau zu verlegende Versorgungsleitungen vorgesehen sind.

15. Halterungssystem (B) mit einer Halterung (1) gemäß den Ansprüchen 1 bis 14 und einer Führungsrinne (F), die einen Boden (F.1), zwei über den Boden (F.1) verbundene, parallel beabstandete Seitenwände (F.2) und einen ersten hakenförmig ausgebildeten Vorsprung (9) aufweist, wobei die Führungsrinne (F) mittels der Halterung (1) außenseitlich einer ihrer Seitenwände (F.2) an einem Aufbau halterbar ist.

## Claims

1. A retainer (1) for laterally fastening a guide channel (F) for cable carrier chains on a structure, wherein the retainer (1) has a support (2) for a floor region (3) of the guide channel (F) and a location fixation for the guide channel (F), the retainer (1) being arrangeable, with a section in height (4), extending laterally to a provided receptacle space (5) for the guide channel (F), wherein in this section in height first fastening means (6) for fastening the retainer (1) are provided laterally on the structure at the height of the section in height (4) and the retainer (1) has second fastening means (7), which are arranged spaced apart from the support (2) in a direction in height (h) and are designed to engage in a formfitting and/or friction-locked manner on the guide channel (F) and wherein a clamp connection with the guide channel (F) is producible by means of the second fastening means (7) and the second fastening means (7) are designed as a clamp receptacle (8) for a first projection (9) of the guide channel (F), which extends laterally from the guide channel (F), and as a clamp element (10) for clamping the first projection (9) in the clamp receptacle (8) in a clamping location, **characterized in that** the clamp receptacle (8) is designed as open at least with one component in the direction in height (h) to accommodate a hooked first projection (9) of the guide channel (F).

2. The retainer (1) according to Claim 1, **characterized in that** the clamp element (10) can be fixed in location in the clamping location in the clamp receptacle (8).

3. The retainer (1) according to Claim 1, **characterized in that** the support (2) protrudes away from the section in height (4) in the transverse direction (q) with a support region (15) in delimitation of the receptacle space (5).

4. The retainer (1) according to Claim 3, **characterized in that** the support (2) delimits the receptacle space (5) for the guide channel (F) on the floor side with a support region (15), wherein the support region (15) is smaller than a provided floor-side extension of the receptacle space (5) in the transverse direction (q).

5. The retainer (1) according to Claim 4, **characterized in that** the support region (15) is less than one-half, less than one-fourth, or less than one-sixth of the floor-side extension of the receptacle space (5) in the transverse direction (q).

6. The retainer (1) according to Claim 1, **characterized in that** the support (2) is designed as a groove (17), which is designed as open in the direction in height (h) to accommodate a provided second projection (18) of the guide channel (F).

7. The retainer (1) according to Claim 6, **characterized in that** the spacing of the second fastening means (7) and the support (2) is dimensioned such that the guide channel (F), in the installed location, is supported in a formfitting manner and with a clamping tension in the direction in height (h) on the clamp receptacle (8) and is supported on the floor side opposite to the direction in height (h) on the support (2).

8. The retainer (1) according to one of Claims 1 to 7, **characterized in that** it is designed as adjustable in height to set its relative location with respect to the structure and/or the guide channel (F).

9. The retainer (1) according to Claim 8, **characterized in that** the first fastening means (6) has an oblong hole (20), which extends with at least one component in the direction in height (h), for accommodating a further first fastening means (6), such as a screw element (21).

10. The retainer (1) according to Claim 8 or 9, **characterized in that** the clamp receptacle (8) has a first contact surface (22.1) having a tooth profile (23) for contact on a second contact surface (22.2), which is provided on the first projection (9) of the guide channel (F), having a tooth profile (23) adapted to the tooth profile (23) of the first contact surface (22.1), wherein the tooth profiles (23) engage in one another in the installed location of the guide channel (F) to support the guide channel (F) on the retainer (1).

11. The retainer (1) according to one of Claims 8 to 10, **characterized in that** it has two fastening parts, which are guided displaceably in one another in and opposite to the direction in height (h), a first fastening part (30) for its fastening on the structure and a second fastening part (31) for fastening the guide channel (F) on the retainer (1), wherein the fastening parts (30, 31) are movable in a stop-limited manner relative to one another between a loose position, in which the fastening parts (30, 31) are detachable from one another, and a retaining position, in which the fastening parts (30, 31) are interlocked with one another, wherein stops which interact in the retaining position are settable for the setting in height.

12. The retainer (1) according to one of Claims 1 to 11, **characterized in that** a feedthrough (25), which is arranged parallel to the receptacle space (5), is provided for supply lines to be laid fixedly on the structure in the longitudinal direction of the guide channel (F).

13. The retainer (1) according to Claim 12, **characterized in that** the feedthrough (25) is laterally delimited by the retainer (1) and the receptacle space (5).

14. The retainer (1) according to Claim 12 or 13, **characterized in that** fastening capabilities for the supply lines to be laid fixedly on the structure are provided on the inlet side and/or outlet side of the feedthrough (25).

15. A retainer system (B) having a retainer (1) according to Claims 1 to 14 and a guide channel (F), which has a base (F.1), two side walls (F.2), which are connected via the base (F.1) and are spaced apart in parallel, and a hooked first projection (9), wherein the guide channel (F) can be mounted by means of the retainer (1) externally on one of its side walls (F.2) on a structure.

## Revendications

1. Élément de retenue (1) pour la fixation latérale d'une goulotte de guidage (F) pour chaînes de guidage d'énergie sur une structure, dans lequel l'élément de retenue (1) comporte un support (2) pour une partie inférieure (3) de la goulotte de guidage (F) et une fixation en position de la goulotte de guidage (F), l'élément de retenue (1) pouvant être disposé, avec une section en hauteur (4), de manière à s'étendre latéralement par rapport à un espace de logement (5) de la goulotte de guidage (F), dans la section en hauteur étant prévus premiers moyens de fixation (6) pour fixer l'élément de retenue (1) latéralement sur la structure au niveau de la section en hauteur (4), et l'élément de retenue (1) comportant deuxièmes moyens de fixation (7) disposés de manière espacée par rapport au support (2) depuis celui-ci et configurés pour engager la goulotte de guidage (F) par adhérence et/ou par liaison de forme, et une connexion sertie avec la goulotte de guidage (F) pouvant être établie à l'aide des deuxièmes moyens de fixation (7), et les deuxièmes moyens de fixation (7) étant configurés comme logement de serrage (8) d'une première saillie (9) de la goulotte de guidage (F) s'étendant latéralement par rapport à la goulotte de guidage (F) et comme élément de serrage (10) pour serrer la première saillie (9) dans le logement de serrage (8) dans une position serrée, **caractérisé en ce que** le logement de serrage (8), pour loger une première saillie (9) en forme de crochet de la goulotte de guidage (F), est formé de manière ouverte en élévation (h) avec au moins un composant.

2. Élément de retenue (1) selon la revendication 1, **caractérisé en ce que** l'élément de serrage (10) est fixé en position lorsqu'il se trouve dans la position serrée dans le logement de serrage (8).

3. Élément de retenue (1) selon la revendication 1 ou 2, **caractérisé en ce que** le support (2) fait saillie, avec une partie de support (15), de la section en hauteur (4) en s'éloignant de celle-ci dans la direction transversale (q) et en délimitant l'espace de logement (5).

4. Élément de retenue (1) selon la revendication 3, **caractérisé en ce que** le support (2) limite l'espace de logement (5) de la goulotte de guidage (F) côté fond par une partie de support (15), la partie de support (15) étant inférieure à une dimension côté fond de l'espace de logement (5) dans la direction transversale (q).

5. Élément de retenue (1) selon la revendication 4, **caractérisé en ce que** la partie de support (15) est inférieure à la moitié, inférieure à un quart ou inférieure à un sixième de la dimension côté fond de l'espace de logement (5) dans la direction transversale (q).

6. Élément de retenue (1) selon la revendication 1, **caractérisé en ce que** le support (2) est réalisé sous forme de rainure (17) formée de manière ouverte dans la direction de la hauteur (h), pour loger une deuxième saillie prévue (18) de la goulotte de guidage (F).

7. Élément de retenue (1) selon la revendication 6, **caractérisé en ce que** l'écartement des deuxièmes moyens de fixation (7) et du support (2) est dimensionné de sorte que la goulotte de guidage (F) en position installée prend appui sur le logement de serrage (8) par engagement positif et sous une tension de serrage dans la direction de la hauteur (h) et prend appui côté fond sur le support (2) contre la direction de la hauteur (h).

8. Élément de retenue (1) selon l'une des revendications 1 à 7, **caractérisé en ce que** celui-ci est configuré de manière réglable en hauteur par rapport à la structure et/ou la goulotte de guidage (F).

9. Élément de retenue (1) selon la revendication 8, **caractérisé en ce que** les premières moyens de fixation (6) comporte un trou oblong (20) s'étendant, au moins avec un premier composant, dans la direction de la hauteur (h), pour loger un autre premier moyen de fixation (6) tel qu'un élément de type vis (21).

10. Élément de retenue (1) selon la revendication 8 ou 9, **caractérisé en ce que** le logement de serrage (8) présente une première surface d'appui (22.1) avec un profil denté (23) pour prendre appui sur une deuxième surface d'appui (22.2) prévue sur la première saillie (9) de la goulotte de guidage (F) et avec un profil denté (23) adapté au profil denté (23) de la première surface d'appui (22.1), les profils dentés (23), dans la position installée de la goulotte de guidage (F), engrenant mutuellement, pour supporter la goulotte de guidage (F) sur le support (2).

11. Élément de retenue (1) selon l'une des revendications 8 à 10, **caractérisé en ce qu'**il comporte deux pièces de fixation guidées de manière à pouvoir coulisser l'une dans l'autre dans la direction de la hauteur (h) et contre la direction de la hauteur (h), à savoir une première pièce de fixation (30) pour sa fixation sur la structure, et une deuxième pièce de fixation (31) pour la fixation de la goulotte de guidage (F) sur le support (2), les pièces de fixation (30, 31) étant mobiles l'une par rapport à l'autre de manière limitée par une butée entre une position de détachement, à laquelle les pièces de fixation (30, 31) peuvent être détachées l'une de l'autre, et une position de retenue, à laquelle les pièces de fixation (30, 31) sont entrelacées l'une avec l'autre, des butées coopérant dans la position de retenue étant réglables pour la réglage de la hauteur.

12. Élément de retenue (1) selon l'une des revendications 1 à 11, **caractérisé en ce que** parallèlement à l'espace de logement (5) est prévu un passage (25) pour des conduites d'alimentation devant être installées de manière fixe sur la structure dans la direction longitudinale de la goulotte de guidage (F).

13. Élément de retenue (1) selon la revendication 12, **caractérisé en ce que** le passage (25) est limité latéralement par l'élément de retenue (1) et l'espace de logement (5).

14. Élément de retenue (1) selon la revendication 12 ou 13, **caractérisé en ce que** sur le côté entrée et/ou sur le côté sortie du passage (25) sont prévus des moyens de fixation pour les conduites d'alimentation devant être installées de manière fixe sur la structure.

15. Système de retenue (B) comprenant un élément de retenue (1) selon l'une des revendications 1 à 14 et une goulotte de guidage (F) comprenant un fond (F.1), deux parois latérales (F.2) écartées parallèlement et interconnectées par le fond (F.1), et une première saillie (9) sous forme de crochet, la goulotte de guidage (F) pouvant être retenue sur une structure sur le côté extérieur de l'une des ses parois latérales (F.2) au moyen de l'élément de retenue (1).
